# EUROPEAN PATENT APPLICATION

(11) **EP 1 627 899 A1**
(43) Date of publication of application: **22.02.2006**
(21) Application number: 05254985.4
(22) Date of filing: 10.08.2005
(51) Int. Cl.: C08L 83/04, C08K 5/00

(54) **Two-part curable silicone composition**

(30) Priority: 19.08.2004 JP 2004239959
(71) Applicant: Shin-Etsu Chemical Co., Ltd., Tokyo (JP)
(72) Inventor: Ikeno, Masayuki, Silicon Denshi Zairyo, Matsuida-machi Usui-gun Gunma-ken (JP)
(74) Representative: Hallybone, Huw George

(57) **Abstract**

Provided is a two-part curable silicone composition including:
(A) 100 parts by mass of an organopolysiloxane containing at least two alkenyl groups bonded to silicon atoms,
(B) an organohydrogenpolysiloxane containing at least two SiH groups, in sufficient quantity to provide from 0.5 to 5.0 mols of SiH groups within the component (B) for every 1 mol of alkenyl groups within the entire composition,
(C) an effective quantity of a hydrosilylation reaction catalyst, and
(D) from 0.0001 to 1 part by mass of a nitrogen-containing compound (a triazole-based compound and/or an imidazole-based compound),
which is prepared in two separate parts, in which
the components (A) through (C) do not exist within one part, and
the component (D) exists in a different part from that of the component (C). Also provided are a method of curing the composition and a cured product obtained by the method. Further provided are a method for potting an electrical and electronic component using the composition and a method for producing a silicone rubber molded product using the composition. The composition is capable of stably maintaining favorable curability and a high level of flame retardancy or a low compression set, and is useful for silicone rubber potting materials and silicone rubber molded products.

## Description

### BACKGROUND OF THE INVENTION

### 1. Field of the Invention

The present invention relates to a two-part curable silicone composition capable of stably maintaining favorable curability and a high level of flame retardancy or a low compression set. The present invention also relates to a method of curing the composition and a cured product obtained by the method. The present invention further relates to a method for potting an electrical and electronic component using the composition and a method for producing a silicone rubber molded product using the composition.

### 2. Description of the Prior Art

It is already well known that nitrogen-containing compounds are effective in improving the flame retardancy and reducing the compression set of addition curable silicone compositions (see patent references 1 to 3). However, it is also known that when a silicone composition containing both a nitrogen-containing compound and a hydrosilylation reaction catalyst is stored, the curability of the composition deteriorates markedly, resulting in destabilizing effects such as a reduction in the flame retardancy or an increase in the compression set. Until now, no silicone composition has been disclosed that enables the stable retention of favorable curability and a high level of flame retardancy or a low compression set.

[Patent Reference 1] U.S. Pub. No. 2003/0220448 A1

[Patent Reference 2] U.S. Patent No. 5,104,919

[Patent Reference 3] JP 4-339863 A

### SUMMARY OF THE INVENTION

An object of the present invention is to provide a two-part curable silicone composition that is capable of stably maintaining favorable curability and a high level of flame retardancy or a low compression set, and which is useful for silicone rubber potting materials used in the protection of electrical and electronic components and semiconductor elements, and for silicone rubber molded products used in charge rollers, transfer rollers, development rollers, and transfer belts and the like within OA (office automation) equipment such as copiers and facsimiles. An object of the present invention is also to provide a method of curing the composition and a cured product obtained by the method. An object of the present invention is further to provide a method for potting an electrical and electronic component using the composition and a method for producing a silicone rubber molded product using the composition.

In order to achieve the above object, the present invention provides a two-part curable silicone composition comprising:
(A) 100 parts by mass of an organopolysiloxane containing at least two alkenyl groups bonded to silicon atoms,
(B) an organohydrogenpolysiloxane containing at least two hydrogen atoms bonded to silicon atoms, in sufficient quantity to provide from 0.5 to 5.0 mols of hydrogen atoms bonded to silicon atoms within the component (B) for every 1 mol of alkenyl groups within the entire composition,
(C) an effective quantity of a hydrosilylation reaction catalyst, and
(D) from 0.0001 to 1 part by mass of at least one nitrogen-containing compound selected from the group consisting of triazole-based compounds and imidazole-based compounds,
   which is prepared in two separate parts, wherein
   the component (A), the component (B), and the component (C) do not exist within one part, and
   the component (D) exists in a different part from that of the component (C).

The present invention also provides a method of curing the composition, comprising mixing the two parts together to cure the composition.

Furthermore, the present invention provides a cured product obtained by the method.

In addition, the present invention provides a method for potting an electrical and electronic component using the composition and a method for producing a silicone rubber molded product using the composition.

In a two-part curable silicone composition of the present invention, because the nitrogen-containing compound and the hydrosilylation reaction catalyst exist within different parts, favorable curability and a high level of flame retardancy or a low compression set can be stably maintained. Accordingly, the two-part curable silicone composition of the present invention is useful for the silicone rubber potting materials used in the protection of electrical and electronic components and semiconductor elements, and for the silicone rubber molded products used in charge rollers, transfer rollers, development rollers, and transfer belts and the like within OA equipment such as copiers and facsimiles.

### DETAILED DESCRIPTION OF THE PREFERRED EMBODIMENTS

As follows is a more detailed description of the present invention.

### [Component (A)]

The organopolysiloxane of the component (A) is the base polymer of a composition of the present invention, and contains an average of at least two (typically from 2 to 50, and preferably from 2 to approximately 20) alkenyl groups bonded to silicon atoms.

The alkenyl groups within the component (A) are preferably alkenyl groups of 2 to 12, and even more preferably of 2 to 6, carbon atoms. Specific examples of such groups include vinyl groups, allyl groups, butenyl groups, pentenyl groups, hexenyl groups and heptenyl groups, and of these, vinyl groups are particularly desirable. Suitable bonding positions for the alkenyl groups of the component (A) include the molecular chain terminals and/or molecular chain side chains.

Examples of silicon atom-bonded organic groups other than the alkenyl groups within the component (A) include identical or different unsubstituted or substituted monovalent hydrocarbon groups that contain no aliphatic unsaturated bonds and preferably contain from 1 to 10 carbon atoms. Specific examples of such groups include alkyl groups such as methyl groups, ethyl groups, propyl groups, butyl groups, pentyl groups, hexyl groups, and heptyl groups; aryl groups such as phenyl groups, tolyl groups, xylyl groups and naphthyl groups; aralkyl groups such as benzyl groups and phenethyl groups; and halogenated alkyl groups such as chloromethyl groups, 3-chloropropyl groups, and 3,3,3-trifluoropropyl groups, and of these, methyl groups and phenyl groups are preferred.

Examples of the molecular structure of this type of component (A) include straight chain, cyclic, branched chain, and three dimensional network structures in which the principal chain comprises repeating diorganosiloxane units, and both molecular chain terminals are blocked with triorganosiloxy groups. In order to ensure favorable physical characteristics for the generated silicone rubber, and good handling and workability for the composition, the viscosity of the component (A) at 25°C is typically within a range from 100 to 500,000 mPa·s, and preferably from 300 to 100,000 mPa·s.

Specific examples of this type of organopolysiloxane of the component (A) include copolymers of dimethylsiloxane and methylvinylsiloxane with both molecular chain terminals blocked with trimethylsiloxy groups, methylvinylpolysiloxane with both molecular chain terminals blocked with trimethylsiloxy groups, copolymers of dimethylsiloxane, methylvinylsiloxane and methylphenylsiloxane with both molecular chain terminals blocked with trimethylsiloxy groups, dimethylpolysiloxane with both molecular chain terminals blocked with dimethylvinylsiloxy groups, methylvinylpolysiloxane with both molecular chain terminals blocked with dimethylvinylsiloxy groups, copolymers of dimethylsiloxane and methylvinylsiloxane with both molecular chain terminals blocked with dimethylvinylsiloxy groups, copolymers of dimethylsiloxane, methylvinylsiloxane and methylphenylsiloxane with both molecular chain terminals blocked with dimethylvinylsiloxy groups, dimethylpolysiloxane with both molecular chain terminals blocked with divinylmethylsiloxy groups, dimethylpolysiloxane with both molecular chain terminals blocked with trivinylsiloxy groups, copolymers of siloxane units represented by the formula R¹₃SiO_{0.5}, siloxane units represented by the formula R¹₂R²SiO_{0.5}, siloxane units represented by the formula R¹₂SiO, and siloxane units represented by the formula SiO₂, copolymers of siloxane units represented by the formula R¹₃SiO_{0.5}, siloxane units represented by the formula R¹₂R²SiO_{0.5}, and siloxane units represented by the formula SiO₂, copolymers of siloxane units represented by the formula R¹₂R²SiO_{0.5}, siloxane units represented by the formula R¹₂SiO, and siloxane units represented by the formula SiO₂, copolymers of siloxane units represented by the formula R¹R²SiO, and a small quantity of either siloxane units represented by the formula R¹SiO_{1.5} or siloxane units represented by the formula R²SiO_{1.5}, as well as mixtures of two or more of these organopolysiloxanes.

In the above formulas, the R¹ groups represent identical or different unsubstituted or substituted monovalent hydrocarbon groups that contain no aliphatic unsaturated bonds and preferably contain from 1 to 10 carbon atoms, and specific examples include alkyl groups such as methyl groups, ethyl groups, propyl groups, butyl groups, pentyl groups, hexyl groups, and heptyl groups; aryl groups such as phenyl groups, tolyl groups, xylyl groups and naphthyl groups; aralkyl groups such as benzyl groups and phenethyl groups; and halogenated alkyl groups such as chloromethyl groups, 3-chloropropyl groups, and 3,3,3-trifluoropropyl groups. The R² groups in the above formulas represent alkenyl groups, preferably of 2 to 12, and even more preferably of 2 to 6, carbon atoms, and examples include vinyl groups, allyl groups, butenyl groups, pentenyl groups, hexenyl groups, and heptenyl groups.

### [Component (B)]

The organohydrogenpolysiloxane of the component (B) is the cross-linking agent for a composition of the present invention, and contains at least two hydrogen atoms bonded to silicon atoms (namely, SiH groups).

Suitable bonding positions for the silicon atom-bonded hydrogen atoms of the component (B) include the molecular chain terminals and/or molecular chain side chains.

Examples of organic groups bonded to silicon atoms within the component (B) include identical or different unsubstituted or substituted monovalent hydrocarbon groups that contain no aliphatic unsaturated bonds and preferably contain from 1 to 10 carbon atoms. Specific examples include alkyl groups such as methyl groups, ethyl groups, propyl groups, butyl groups, pentyl groups, hexyl groups, cyclohexyl groups, and heptyl groups; aryl groups such as phenyl groups, tolyl groups, xylyl groups and naphthyl groups; aralkyl groups such as benzyl groups and phenethyl groups; and halogenated alkyl groups such as chloromethyl groups, 3-chloropropyl groups, and 3,3,3-trifluoropropyl groups, and of these, methyl groups and phenyl groups are preferred.

Examples of the molecular structure of this type of component (B) include straight chain, cyclic, branched chain, and three dimensional network structures. In order to ensure favorable physical characteristics for the generated silicone rubber, and good handling and workability for the composition, the viscosity of the component (B) at 25°C is typically within a range from 0.1 to 1,000 mPa·s, and preferably from 5 to 500 mPa·s. This organohydrogenpolysiloxane can use compounds that contain at least two, and preferably at least three (typically from 3 to 300), and even more preferably from 3 to approximately 100, hydrogen atoms bonded to silicon atoms (namely, SiH groups) within each molecule, and in which the number of silicon atoms within each molecule is typically within a range from 2 to 300, and preferably from 3 to approximately 150.

Suitable examples of this type of organohydrogenpolysiloxane of the component (B) include 1,1,3,3-tetramethyldisiloxane, 1,3,5,7-tetramethylcyclotetrasiloxane, methylhydrogenpolysiloxane with both molecular chain terminals blocked with trimethylsiloxy groups, copolymers of dimethylsiloxane and methylhydrogensiloxane with both molecular chain terminals blocked with trimethylsiloxy groups, copolymers of dimethylsiloxane, methylhydrogensiloxane and methylphenylsiloxane with both molecular chain terminals blocked with trimethylsiloxy groups, dimethylpolysiloxane with both molecular chain terminals blocked with dimethylhydrogensiloxy groups, copolymers of dimethylsiloxane and methylhydrogensiloxane with both molecular chain terminals blocked with dimethylhydrogensiloxy groups, copolymers of dimethylsiloxane and methylphenylsiloxane with both molecular chain terminals blocked with dimethylhydrogensiloxy groups, methylphenylpolysiloxane with both molecular chain terminals blocked with dimethylhydrogensiloxy groups, copolymers formed from siloxane units represented by the formula R¹₃SiO_{0.5}, siloxane units represented by the formula R¹₂HSiO_{0.5}, and siloxane units represented by the formula SiO₂, copolymers formed from siloxane units represented by the formula R¹₂HSiO_{0.5} and siloxane units represented by the formula SiO₂, copolymers formed from siloxane units represented by the formula R¹HSiO, and a small quantity of either siloxane units represented by the formula R¹SiO_{1.5} or siloxane units represented by the formula HSiO_{1.5}, as well as mixtures of two or more of these organopolysiloxanes. R¹ in the above formulas is as defined above.

The blend quantity of this component (B) is sufficient to provide from 0.5 to 5.0 mols, and preferably from 0.8 to 3.0 mols, of hydrogen atoms bonded to silicon atoms within the component (B) for every 1 mol of alkenyl groups within the entire composition (or silicon atom-bonded alkenyl groups within the component (A) in those cases where the component (A) is the only component in the composition that contains alkenyl groups). If this quantity of hydrogen atoms is less than 0.5 mols, then the composition may not cure adequately. Furthermore, if the quantity of hydrogen atoms exceeds 5 mols, the thermal resistance of the obtained cured product may deteriorate markedly.

### [Component (C)]

There are no particular restrictions on the hydrosilylation reaction catalyst of the component (C), provided it is capable of accelerating the addition reaction between the alkenyl group-containing organopolysiloxane of the component (A) and the organohydrogenpolysiloxane of the component (B). Conventional hydrosilylation reaction catalysts can be used as the component (C). Specific examples include chloroplatinic acid, alcohol-modified chloroplatinic acid, coordination compounds of chloroplatinic acid with olefins, vinylsiloxanes or acetylene compounds, as well as tetrakis(triphenylphosphine)palladium or chlorotris(triphenylphosphine)rhodium, although platinum-based compounds are particularly preferred.

The quantity added of the component (C) need only be sufficient to ensure effective activity as a hydrosilylation reaction catalyst, and can be increased or decreased in accordance with the desired curing rate. A typical quantity, calculated as the mass of the catalyst metal element relative to the combined mass of the component (A) and the component (B) is within a range from 0.1 to 1,000 ppm, with quantities from 1 to 500 ppm being preferred, and quantities from 10 to 100 ppm being the most desirable. If the blend quantity is overly large, then no further acceleration of the addition reaction is achieved, meaning the addition is uneconomic.

### [Component (D)]

The component (D) is a compound that imparts flame retardancy and/or low compression set characteristics to the composition of the present invention, and comprises at least one nitrogen-containing compound selected from the group consisting of triazole-based compounds and imidazole-based compounds. Examples of suitable triazole-based compounds include 1,2,3-triazole, 1,2,4-triazole, benzotriazole, and N-trimethylsilyl-benzotriazole. Examples of suitable imidazole compounds include imidazole, 1-methylimidazole, and benzimidazole. These compounds can be used either alone, or in combinations of two or more different compounds.

The blend quantity of the component (D) varies considerably depending on the characteristics of the nitrogen-containing compound used, and can therefore not be generalized, although a typical quantity is within a range from 0.0001 to 1 part by mass, and preferably from 0.005 to 0.3 parts by mass, per 100 parts by mass of the component (A). If this blend quantity is either too small or too large, then the effect of the component (D) may diminish. In order to ensure that the component (D) is dispersed uniformly through the composition of the present invention, the component (D) may be dissolved in an organic solvent such as ethanol, isopropanol or toluene prior to blending.

### [State of Existence for each Component]

An important feature of the present invention is the fact that prior to mixing at the point of use, the composition of the present invention is separated into at least two parts, and typically two parts, for storage. More specifically, the composition is prepared so that the component (A), the component (B) and the component (C) do not exist within one part, and the component (C) and the component (D) exist within different parts. The component (A) is preferably present within both parts. Furthermore, the component (B) preferably exists in a different part from the component (C). In one suitable example, one part contains a portion of the component (A), the component (B) and the component (D), and the other part contains the remainder of the component (A) and the component (C). These two parts are blended independently, and stored separately.

### [Applications for the Composition]

When producing a silicone rubber product, the two parts described above are combined and mixed together in a mixing device to prepare a single, uniform composition, and this composition is then applied to a suitable substrate and cured in accordance with the intended application. There are no particular restrictions on the curing conditions for a composition of the present invention, which will vary depending on the makeup and the quantity of the composition. A composition of the present invention can be cured at either room temperature, or if required, by heating. If heating is used, then the curing temperature is typically within a range from 40 to 200°C, and preferably from 60 to 180°C. The relative proportions of each of the two parts that must be mixed together can be adjusted by varying the quantity of the component (A) within each part, and typically a mass ratio of 1:1 provides superior workability.

The composition of the present invention can be used for potting an electrical and electronic component by a method comprising the steps of:
mixing the two parts stated above together to prepare a single, uniform composition,
applying said composition to said electrical and electronic component and
curing said composition on said electrical and electronic component. Examples of the electrical and electronic component include a semiconductor element.

The composition of the present invention can also be used for producing a silicone rubber molded product by a method comprising the steps of:
mixing the two parts stated above together to prepare a single, uniform composition,
pouring said composition into a mold,
curing the thus poured composition to produce said silicone rubber molded product, and
releasing said silicone rubber molded product from said mold. The silicone rubber molded product can be used in charge rollers, transfer rollers, development rollers, and transfer belts and the like within OA equipment such as copiers and facsimiles.

### [Other Components]

Examples of other optional components include inorganic fillers such as fumed silica, precipitated silica, crystalline silica, hollow fillers, silsesquioxanes, fumed titanium dioxide, magnesium oxide, zinc oxide, iron oxide, aluminum hydroxide, magnesium carbonate, calcium carbonate, zinc carbonate, layered mica, carbon black, diatomaceous earth, and glass fibers, as well as the above types of fillers that have undergone surface treatment with an organosilicon compound such as an organoalkoxysilane compound, organochlorosilane compound, organosilazane compound, or low molecular weight siloxane compound. Furthermore, silicone rubber powders and silicone resin powders may also be used.

In addition, other optional components may also be added to the composition of the present invention, provided such addition does not impair the object of the present invention, and examples of other possible components include organopolysiloxanes with one hydrogen atom or alkenyl group bonded to a silicon atom within each molecule, organopolysiloxanes which have no hydrogen atoms or alkenyl groups bonded to the silicon atoms, organic solvents, creep hardening prevention agents, plasticizers, thixotropic agents, pigments, dyes and mold prevention agents. These optional components may be added to either of the aforementioned two parts, or may also be added to both parts.

### EXAMPLES

As follows is a description of specifics of the present invention using a series of examples and comparative examples, although the present invention is in no way limited by these examples. Viscosity values refer to values measured at 25°C.

### [Example 1]

50 parts by mass of a straight chain diorganopolysiloxane of viscosity 400 mPa·s, comprising a principal chain of repeating dimethylsiloxane units and with both terminals blocked with dimethylvinylsiloxy groups, and 50 parts by mass of crystalline silica (fine quartz powder) with an average particle diameter of 5 µm were mixed together, and then subjected to heat treatment for 2 hours at 150°C, thus preparing a base compound (I). 84 parts by mass of this base compound (I) was then mixed uniformly with 15 parts by mass of the straight chain diorganopolysiloxane of viscosity 400 mPa·s, comprising a principal chain of repeating dimethylsiloxane units and with both terminals blocked with dimethylvinylsiloxy groups, and 0.4 parts by mass of a complex of chloroplatinic acid and divinyltetramethyldisiloxane (platinum metal atom content: 1% by mass), thus completing preparation of a composition A-1.

In a separate preparation, 92 parts by mass of the base compound (I) was mixed uniformly with 0.4 parts by mass of 1,3,5,7-tetramethyl-1,3,5,7-tetravinylcyclotetrasiloxane, 0.1 parts by mass of a 10% by mass ethanol solution of benzotriazole, 3.0 parts by mass of a methylhydrogenpolysiloxane of viscosity 17 mPa·s with both molecular chain terminals blocked with trimethylsiloxy groups (silicon atom-bonded hydrogen atom content = 0.58% by mass), and 2.2 parts by mass of the compound with the structural formula shown below, thus completing preparation of a composition B-1.

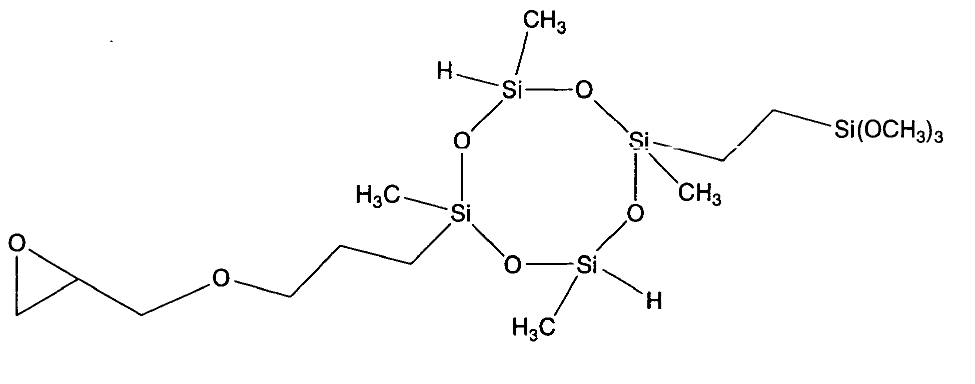

Equal quantities of the composition A-1 and the composition B-1 were mixed together uniformly, and then cured by heating at 105°C for 1 hour. As a result, a cured product with a hardness value (durometer type A) of 23 was obtained. Furthermore, a cured sheet of thickness 1.5 mm was cut into strips of 125 mm x 13 mm, and these strips were subjected to flammability testing in accordance with the UL-94 V-0, V-1, and V-2 vertical flame test standards prescribed by Underwriters Laboratories Inc. The results are shown in Table 1. The values shown represent the average values of 5 tests.

### [Comparative Example 1]

With the exception of adding 0.1 parts by mass of the 10% by mass ethanol solution of benzotriazole to the composition A-1, a composition A-2 was prepared in the same manner as the preparation of the composition A-1 in the example 1. Furthermore, with the exception of not using the 0.1 parts by mass of the 10% by mass ethanol solution of benzotriazole, a composition B-2 was prepared in the same manner as the preparation of the composition B-1 in the example 1.

Equal quantities of the composition A-2 and the composition B-2 were mixed together uniformly, and then cured by heating at 105°C for 1 hour. As a result, a cured product with a hardness value (durometer type A) of 18 was obtained. Furthermore, a cured sheet of thickness 1.5 mm was cut into strips of 125 mm x 13 mm, and these strips were subjected to flammability testing in accordance with the UL-94 V-0, V-1, and V-2 vertical flame test standards prescribed by Underwriters Laboratories Inc. The results are shown in Table 1. The values shown represent the average values of 5 tests.

### [Example 2]

100 parts by mass of a straight chain diorganopolysiloxane of viscosity 18,000 mPa·s, with both molecular chain terminals blocked with trimethylsiloxy groups, containing silicon atom-bonded vinyl groups only on molecular side chains as methylvinylsiloxane units, and in which the quantity of vinyl group containing siloxane units was 5 mol%, and 85 parts by mass of crystalline silica with an average particle diameter of 1 µm were mixed together, and then subjected to heat treatment for 2 hours at 150°C. The heat-treated product was then mixed uniformly with 3.5 parts by mass of hydrophobic silica of specific surface area 120 m²/g that had been treated with dimethyldichlorosilane, thus preparing a base compound (II). 188.5 parts by mass of this base compound (II) was then mixed uniformly with 10 parts by mass of the straight chain diorganopolysiloxane of viscosity 18,000 mPa·s, with both molecular chain terminals blocked with trimethylsiloxy groups, containing silicon atom-bonded vinyl groups only on molecular side chains as methylvinylsiloxane units, and in which the quantity of vinyl group-containing siloxane units was 5 mol%, 43 parts by mass of a straight chain diorganopolysiloxane of viscosity 30,000 mPa·s, comprising a principal chain of repeating dimethylsiloxane units and with both terminals blocked with dimethylvinylsiloxy groups, and 1.0 parts by mass of a complex of chloroplatinic acid and divinyltetramethyldisiloxane (platinum metal atom content: 1% by mass), thus completing preparation of a composition A-3.

In a separate preparation, 188.5 parts by mass of the base compound (II) was mixed uniformly with 43 parts by mass of the straight chain diorganopolysiloxane of viscosity 30,000 mPa·s, comprising a principal chain of repeating dimethylsiloxane units and with both terminals blocked with dimethylvinylsiloxy groups, 0.35 parts by mass of ethynylcyclohexanol, 0.3 parts by mass of 1,3,5,7-tetramethyl-1,3,5,7-tetravinylcyclotetrasiloxane, 0.06 parts by mass of a 10% by mass ethanol solution of benzotriazole, 7.5 parts by mass of a dimethylpolysiloxane of viscosity 18 mPa·s containing hydrogen atoms bonded to the silicon atoms at both molecular chain terminals (silicon atom-bonded hydrogen atom content = 0.13% by mass), and 2.8 parts by mass of a dimethylpolysiloxane of viscosity 12 mPa·s containing hydrogen atoms bonded to silicon atoms at both the molecular chain terminals and in non-terminal side chains (silicon atom-bonded hydrogen atom content = 0.54% by mass), thus completing preparation of a composition B-3.

Equal quantities of the composition A-3 and the composition B-3 were mixed together uniformly, and then cured for 10 minutes at 120°C, and then a further 4 hours at 200°C. As a result, a cured product with a hardness value (durometer type A) of 21 was obtained. A compression set test was also conducted in accordance with JIS K6301. The results are shown in Table 2.

### [Comparative Example 2]

With the exception of adding 0.06 parts by mass of the 10% by mass ethanol solution of benzotriazole to the composition A-3, a composition A-4 was prepared in the same manner as the preparation of the composition A-3 in the example 2. Furthermore, with the exception of not using the 0.06 parts by mass of the 10% by mass ethanol solution of benzotriazole, a composition B-4 was prepared in the same manner as the preparation of the composition B-3 in the example 2.

Equal quantities of the composition A-4 and the composition B-4 were mixed together uniformly, and then cured for 10 minutes at 120°C, and then a further 4 hours at 200°C. As a result, a cured product with a hardness value (durometer type A) of 17 was obtained. A compression set test was also conducted in accordance with JIS K6301. The results are shown in Table 2.

**Table 1**

| | | | Example 1 | Comparative example 1 |
|---|---|---|---|---|
| Hardness (durometer type A) | | | 23 | 18 |
| Flame retardancy | Flame test (seconds) | first | 5 | 35 |
| | | second | 3 | 8 |
| | Evaluation | | V-0 | NG |

In the table, "V-0" indicates that the flame retardancy of the composition has been evaluated as meeting the standard V-0, whereas "NG" indicates that the flame retardancy of the composition did not meet the V-0 standard.

**Table 2**

| | Example 2 | Comparative example 2 |
|---|---|---|
| Hardness (durometer type A) | 21 | 17 |
| Compression set (180°C, 22 hours) | 5 | 15 |

### [Evaluations]

The compositions of the examples had favorable curability, and exhibited a higher level of flame retardancy and a lower compression set than the compositions of the comparative examples.

## Claims

1. A two-part curable silicone composition comprising:
(A) 100 parts by mass of an organopolysiloxane containing at least two alkenyl groups bonded to silicon atoms,
(B) an organohydrogenpolysiloxane containing at least two hydrogen atoms bonded to silicon atoms, in sufficient quantity to provide from 0.5 to 5.0 mols of hydrogen atoms bonded to silicon atoms within component (B) for every 1 mol of alkenyl groups within said composition,
(C) an effective quantity of a hydrosilylation reaction catalyst, and
(D) from 0.0001 to 1 part by mass of at least one nitrogen-containing compound selected from the group consisting of triazole-based compounds and imidazole-based compounds,
which is prepared in two separate parts, wherein
said component (A), said component (B), and said component (C) do not exist within the same part, and
said component (D) exists in a different part from that of said component (C).

2. The composition according to claim 1, wherein one of said two parts contains a portion of said component (A), said component (B) and said component (D), and the other contains the remainder of said component (A) and said component (C).

3. A method of curing the composition according to claim 1, comprising mixing said two parts together to cure said composition.

4. A cured product obtained by the method according to claim 3.

5. A method for potting an electrical and electronic component, comprising the steps of:
mixing the two parts stated in claim 1 together to prepare a single, uniform composition,
applying said composition to said electrical and electronic component and
curing said composition on said electrical and electronic component.

6. The method according to claim 5, wherein said electrical and electronic component is a semiconductor element.

7. A method for producing a silicone rubber molded product, comprising the steps of:
mixing the two parts stated in claim 1 together to prepare a single, uniform composition,
pouring said composition into a mold,
curing the thus poured composition to produce said silicone rubber molded product, and
releasing said silicone rubber molded product from said mold.

8. The method according to claim 7, wherein said silicone rubber molded product is a charge roller, a transfer roller, a development roller, or a transfer belt within a copier or a facsimile.
